# EUROPÄISCHE PATENTSCHRIFT

(11) **EP 2 130 963 B1**
(45) Veröffentlichungstag und Bekanntmachung des Hinweises auf die Patenterteilung: **24.08.2011**
(21) Anmeldenummer: 09161680.5
(22) Anmeldetag: 02.06.2009
(51) Int. Cl.: D06B 23/20, D06B 19/00, D06B 23/30, F26B 25/00, B01D 46/04

(54) **Warmluftschrank für eine Textilbehandlungsanlage und Luft-Reinigungsvorrichtung**
Warm air cabinet for a textile treatment assembly and air purification device
Armoire d'air chaud pour une installation de traitement de textile et dispositif de nettoyage d'air

(30) Priorität: 02.06.2008 DE 102008026262; 26.08.2008 DE 102008039210
(43) Veröffentlichungstag der Anmeldung: 09.12.2009
(73) Patentinhaber: MAGEBA Textilmaschinen GmbH & Co. KG, 54470 Bernkastel-Kues (DE)
(72) Erfinder: Stang, Oliver Alexander, 54470 Bernkastel-Kues (DE)
(74) Vertreter: Müller, Enno

(56) Entgegenhaltungen:
- WO-A-2007/065671
- DE-A1- 3 212 892
- DE-A1- 3 234 436
- FR-A- 1 444 496
- GB-A- 499 045
- GB-A- 2 147 521

## Beschreibung

Die Erfindung betrifft zunächst einen Warmluftschrank für eine Textilbehandlungsanlage, insbesondere eine Bandwaren-Behandlungsanlage, beispielsweise als Bestandteil einer Bandwaren-Textilfärbeeinrichtung oder einer Bandwaren-Textilfixiereinrichtung (Thermosoliereinrichtung), mit einer Zuluftöffnung und einer Abluftöffnung, wobei in dem Warmluftschrank eine von der Luft zu durchströmende Luft-Reinigungsvorrichtung angeordnet ist mit einem aus einem metallischen Werkstoff oder einem hochtemperaturbeständigen Kunststoff bestehenden Reinigungselement.

Derartige Warmluftschränke sind in verschiedener Hinsicht bekannt. Die Erfindung hat insbesondere auch Bedeutung für Textilfärbeeinrichtungen oder Textilthermoisoliereinrichtungen außerhalb der Bandwaren-Textilbehandlungsvorrichtungen. Andererseits sind die Bandwaren-Textilbehandlungsvorrichtungen ein wesentliches Anwendungsgebiet.

In einem solchen Warmluftschrank wird das Textil, also beispielsweise eine Bandware, bei hohen Temperaturen, in der Regel über 160° C, oftmals über 200° C, beispielsweise bei 230° C, behandelt. Dies durch entsprechend aufgeheizte und im Kreislauf geführte Luft. Die Luft wird weiter über Zuluft ergänzt und Abluft wird abgeführt. Die im Kreislauf gerührte Luft wird in einer Aufheizeinrichtung, die beispielsweise in einer Brennereinrichtung bestehen kann, ständig auf der genannten Temperatur gehalten. Für den Umluftbetrieb ist eine entsprechendes Gebläse erforderlich

Angesichts der genannten Temperaturen können einerseits in dem Textilgut Abbrerunexscheinungen hinsichtlich Filamenten auftreten. Sie führen zu in der Umluft dann enthaltenen entsprechenden Rückstandsprodukten. Darüber hinaus können Farbstoffpartikel in Form von flockenartigen Ausbildungen in der Luft mitgetragen werden. Auch weist die Umluft einen gewissen Spinnölgehalt auf, da beispielsweise bei der Herstellung von Polyesterfäden Spinnöl den Fäden zugegeben wird um eine bessere Herstellbarkeit zu ermöglichen. Dieses Spinnöl wird dann in einen solchen Warmluftschrank von der Luft teilweise mitgerissen.

Die genannten Verunreinigungen führen dazu, dass insbesondere das Umluftgebläse stark verschmutzt. Der Warmluftschrank muss daher in nahezu regelmäßigen Abständen wegen Reinigung oder Austausch des Umluftgebläses abgeschaltet werden. Dies führt zu entsprechenden Betriebsunterbrechungen.

Aus der DE 32 12 892 A1 ist ein rotierender Flächenfilter bekannt, der als Siebfilter ausgebildet ist und aus der den Flächenfilter durchsetzenden Luft Verunreinigungen abscheidet. Ein entsprechendes Siebfilter ist auch in der GB 499 045 A beschrieben. Auch hier wird zufolge Durchsetzen des Siebfilters durch die verunreinigte Luft die Verunreinigungen abgeschieden. Im Weiteren zeigt einen solchen von der Luft durchsetzten Filter auch die DE 32 34 436 A1.

Die Erfindung beschäftigt sich in einer Hinsicht mit der Aufgabe, einen Warmluftschrank für eine Textilbehandlungsanlage anzugeben, der eine vorteilhafte Reinigung der darin umgewälzten Luft aufweist.

Eine mögliche Lösung dieser Ausgabe ist nach einem ersten Erfindungsgedan-ken durch den Gegenstand des Anspruches 1 gegeben, wobei in diesem Fall darauf abgestellt ist, dass die Luft-Reinigungsvorrichtung aus einer Vielzahl von plattenartigen Reinigungselementen besteht, die auf einer Welle befestigt sind, welche Reirdgungselemente geschlossen ausgebildet sind zur Ablagerung von in der oberflächlich an den Plattenelementen entlartgatrömenden Abluft befindlichen Schmutzteilen auf der Plattenoberfläche. Erfindungsgemäß ist der Weg beschritten, die Abluft durch Niederschlag von darin enthaltenen Sclumutzpartikeln an Massivteilen, die als plattenartige Elemente ausgebildet sind, zu reinigen. Solche plattenartigen Elemente, in Form von Massivteilen, lassen sich günstig im Hinblick auf die erhöhten Beanspruchungsbedingungen bei den genannte Temperaturen ausbilden. Bei hoher Standzeit können sie in effektiver Weise Schmutzteilchen aus dem Luftstrom entfernen.

Grundsätzlich können die Reinigungselemente auch zunächst feststehend angeordnet sein. Bevorzugt ist jedoch, dass sie an dem Reinigungsort, an dem sie sich befinden, bewegbar sind. Etwa, um in gewissen Zeitabständen schrittweise bewegt zu werden. Die Bewegung kann in einer Linearbewegung bestehen. Sie kann auch in einer Kreisbewegung bestehen. Weiter ist bevorzugt, dass die Reinigungselemente bei Betrieb des Warmluftschrankes beständig bewegt sind.

Im Hinblick auf die Bewegbarkeit ist weiter bevorzugt, dass die Luft-Reinigungsvorrichtung eine die Reinigungselemente durchsetzende Welle aufweist und dass die Reinigungselemente mittels der Welle bewegbar sind. Hier bietet sich vorteilhafterweise eine Kreisbewegung an. Die Reinigungselemente sind entsprechend drehbar.

Hierbei können die Reinigungsgelemente einerseits im Hinblick auf den Luftstrom, von dem sie durchsetzt sind, sich in Richtung des Luftstromes bewegen. Sie können sich aber auch entgegengesetzt bewegen. Bevorzugt ist derzeit, dass sie sich mit dem Luftstrom bewegen. Für den Fall, dass die Reinigungselemente, was einer möglichen Einbauweise entspricht, derart eingebaut sind, dass sie über ihre gesamte Höhe von dem Luftstrom durchsetzt sind, ergibt sich ohne-hin, bei einer drehenden Bewegung, in einer Hälfte eine Bewegung mit der Luft und in der anderen Hälfte eine Bewegung entgegen der Luftströmung.

Weiterhin bevorzugt ist jedoch, dass die Reinigungselemente derart bezüglich des Luftstromes angeordnet sind, dass sie sich nur teilweise in der Luftsrömung befinden. Dies hat den Vorteil, dass sie teilweise sich in einer hinsichtlich der Luftströmung beruhigten Zone befinden bzw. in diese bewegt werden können. Hier kann eine günstige Abreinigung der Reinigungselemente erfolgen.

Weiter ist insofern bevorzugt, dass ein aus der Luftströmung herausbewegtes Reinigungselement bzw. eine herausbewegter Abschnitt eines Reinigungselementes mit einer Abreingungsvorrichtung zusammenwirkt. Hinsichtlich der Abreinigungsvorrichtung können verschiedenartige Prinzipien zum Einsatz kommen. Beispielsweise eine kratzende oder rakelnde Zusammenwirkung mit einem Reinigungselement. Grundsätzlich ist auch eine Reinigung mittels einer Reinigungsflüssigkeit möglich.

Hinsichtlich eines Reinigungselementes selbst ist eine Ausbildung aus verschiedenartigen Werkstoffen mögliche. Eine bevorzugte Ausbildung betrifft eine Ausbildung als Stahlplatte. Im Hinblick auf mögliche weitere gewünschtenfalls realisierte Eigenschaften eines Reinigungselementes kann sich jedoch auch ein anderer Werkstoff, insbesondere ein Kunststoff-Werkstoff, empfehlen. So kann vorgesehen sein, dass das Reinigungselement elektrostatisch aufladbar ist, beispielsweise für einen bestimmten Zeitraum der Reinigung. Eine elektrostatische Aufladung kann aber auch ständig gegeben sein. Die elektrostatische Aufladung kann schon durch die Zusammenwirkung mit der Abreinigungsvorrichtung erreicht sein. Hierzu empfiehlt sich ein Kunststoff-Werkstoff. Es handelt sich entsprechend um einen temperaturbeständigen Kunststoff, beispielsweise Kevlaer oder Carbon.

Weiter kann ergänzend oder alternativ vorgesehen sein, dass ein Reinigungselement magnetisch ist, etwa in dem Sinne, dass es einzelne magnetische Bereiche aufweist oder insgesamt magnetisch ist, oder hinsichtlich einzelner Bereiche oder insgesamt magnetisierbar ist. Letzteres beispielsweise im Sinne eines Elektromagneten.

Auch ist bevorzugt, dass das Reinigungselement eine größere Oberflächenrauhigkeit aufweiset. Dies betrifft eine Rauhigkeit im Zehntel-Millimeterbereich oder größter. Es kann sich auch um einen Millimeter Tiefenänderung oder mehr handeln. Diese Rauhigkeit kann im Sinne von konzentrisches Kreisen ausgebildet sein. Sie kann auch ohne Vorzugsrichtung ausgebildet sein bzw. vollständig homogen verteilt über die mit dem Luftstrom zusammenwirkende Oberfläche des Reinigungselementes. Weiter kann sie auch in Form von geraden Linien, ggf. sich kreuzenden geraden Linien beispielsweise, ausgebildet sein.

Hinsichtlich der Bewegung des Reinigungselementes kann, wie schon grundsätzlich angesprochen, auch eine intermittierende Bewegung vorgesehen sein. Dies im Hinblick auf abwechselnde Stillstands- und Bewegungsphasen. Hierbei können diese Phasen auch unterschiedlich lang sein. Beispielsweise kann die Stillstandsphase wesentlich länger sein als die Bewegungsphase. Die Stillstandsphase kann im Bereich von einigen Minuten, 10 Minuten bis hin zu 20 Minuten, aber auch bis hin zu einer Stunde oder mehreren Stunden, gewählt sein. Die Bewegungsphase kann entsprechend auch im Bereich einer oder mehrerer Minuten und auch Stunden gewählt sein. Insbesondere ist hinsichtlich der Abwechslung zwischen Stillstands- und Bewegungsphase auch unter Umständen von Bedeutung, dass die Bewegungsphase nur so lange dauert, bis ein neuer, noch zuvor nicht wesentlich mit der zu reinigenden Luft beaufschlagter Bereich in die Luftströmung bewegt ist.

In diesem Zusammenhang ist auch bevorzugt, dass das Reinigungselement langsam bewegbar ist. Dies kann einerseits die Bewegungsphase in Abwechslung mit einer Stillstandsphase betreffen, andererseits aber auch eine ständige Bewegung des Reinigungselementes. Eine langsame Bewegung ist etwa darin zu sehen, dass das Reinigungselement mit einem Zentimeter pro Minute bis hin zu einem Zentimeter pro Stunde bewegt wird. Dies etwa bei einer kreisförmigen Bewegung im Hinblick auf eine Umfangsbewegung im äußeren Umfang. Man kann hier auch eine entsprechende Windgeschwindigkeit nennen. Bei einer Linearbewegung bezieht sich die genannte Bewegungsgeschwindigkeit auf die lineare Versetzung.

Im Einzelnen kann vorgesehen sein, dass das Reinigungselement einmal pro Stunde oder weiniger aus der Luftströmung heraus und wieder hineinbewegt wird, oder dass das Reinigungselement einmal in vier Stunden oder weniger aus der Luftströmung heraus und wieder in diese hineinbewegt wird. Eine Maßnahme betrifft weiterhin die Anordnung des Reinigungselementes im Hinblick auf die zu reinigende Luftströmung. Hierbei ist es bevorzugt, etwa am konstruktiven Beispiel einer Welle mit drehenden Reinigungsscheiben, dass die Welle mit der Luftströmung einen spitzen Winkel einschließt. Dies kann ein spitzer Winkel in einer Projektion sein, aber auch in zwei Projektionen, die auf einander senkrecht stehen.

Eine darüber hinaus bevorzugte Ausgestaltung des Warmluftschrankes kann auch vorsehen, dass zwei Reinigungseinrichtungen dem Warmluftschrank zugeordnet sind. Von diesen befindet sich zumindest eine innerhalb des Warmluftschrankes (zur Ausübung der Reinigungsfunktion). Es können, sich auch beide im dem Warmluftschrank befinden, wobei dann bevorzugt ist, dass eine der Reinigungseinrichtungen sich in einer Auswechselstellung befindet. Dies bedeutet, dass sie etwa einer Klappenöffnung oder dergleichen des Warmluftschrankes zugeordnet ist oder dort entnommen werden kann, bevorzugt ohne dass eine Betriebsunterbrechung erforderlich ist.

Weiter betrifft die Erfindung eine Luft-Reinigungsvorrichtung, insbesondere für einen Warmluftschrank wie er vorstehend angesprochen ist.

In dieser Hinsicht stellt sich der Erfindung die Aufgabe, eine vorteilhafte Luft-Reinigungsvorrichtung anzugeben.

Eine mögliche Lösung dieser Aufgabe ist nach einem weiteren Erfindungsgedanken durch den Gegenstand des Anspruches 14 gegeben, wobei darauf abgestellt ist, dass die Luft-Reinigungsvorrichtung aus einer Vielzahl von plattenartigen Reinigungselementen besteht, die auf einer Welle befestigt sind, welche Reinigungselemente geschlossen ausgebildet sind, zur Ablagerung von in oberflächlich an den Plattentelementen enflangströmende Abluft befindlichen Schmutzteilen auf der Plattenoberfläche.

Derartige Luft-Reinigungsvorrichtungen können in ganz unterschiedlichen Vorrichtungen im Hinblick auf ein zu behandelndes Textil zum Einsatz kommen, beispielsweise bis hin zu Teppich-Textilbehandlungseinrichtungen. Hierbei können dann im Hinblick auf den zu reinigenden Luftstrom Breiten der Luft-Reinigungsvorrichtung bis hin zu einem und mehreren Metern vorgesehen sein. So sind in dieser Beziehung realistische Werte auch im Bereich von mehr als 5 m bis hin auch zu 20 m beispielsweise zu sehen. Diesbezüglich sind in die Offenbarungen auch sämtliche Zwischenwerte, insbesondere in 1-cm-Schritten, eingeschlossen.

Nachstehend ist die Erfindung des Weiteren anhand der beigefügten Zeichnung, die jedoch lediglich ein Ausführungsbeispiel darstellt, erläutert. Hierbei zeigt:
- Fig. 1: eine schematische Ansicht eines Warmluftschrankes;
- Fig. 2: eine ausschnittsweise Darstellung des Warmluftschrankes gemäß Fig. 1;
- Fig. 3: eine Darstellung des Bereiches des Umluftgebläses, in einer Seitenansicht;
- Fig. 4: den Gegenstand gemäß Fig. 3 in einer Draufsicht;
- Fig. 5: einen Querschnitt durch die Luftreinigungsanlage, ge- schnitten entlang der Linie V-V in Fig. 3; und
- Fig. 6: eine Darstellung gemäß Fig. 3, betreffend eine Anordnung von zwei Luft-Reinigungsvorrichtungen innerhalb eines Warmluftschrankes.

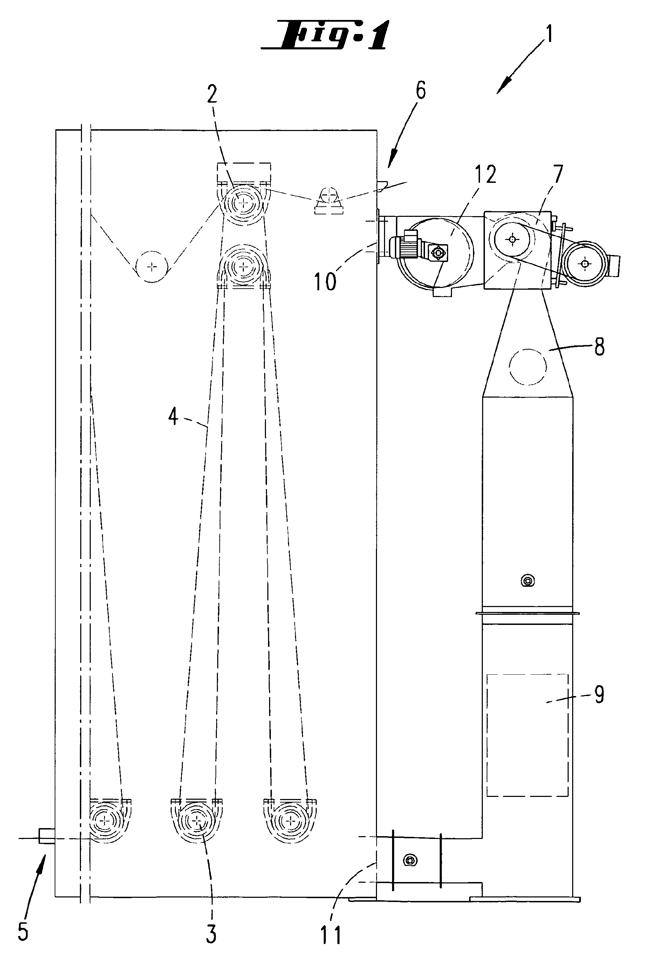

Dargestellt und beschrieben ist zunächst mit Bezug zu Fig. 1 ein Warmluftschrank 1, der beim Ausführungsbeispiel für eine Behandlung von Textilbändern ausgebildet ist. Insofern ist lediglich angedeutet, dass über Umlenkrollen 2, 3 die Bandware 4 den Warmluftschrank 1 durchsetzt, wobei sie im Bereich 5 in den Warmluftschrank eintritt und im Bereich 6 aus dem Warmluftschrank herausgeführt ist.

Die in dem Warmluftschrank umgewälzte Luft wird mittels eines Gebläses 7 in einem außerhalb des Warmluftschrankes 1 angeordneten Luftkanal 8 umgewälzt. In dem Luftkanal 8 ist eine in weiterer Einzelheit nicht dargestellte Heizeinrichtung 9 angeordnet. Der Luftkanal 8 ist über eine Auslassöffnung 10, über welche Luft aus dem Warmluftschrank 1 angesaugt wird und eine Einlassöffnung 11, über welche die erhitzte Luft in den Warmluftschrank 1 zurückgeführt wird, mit diesem verbunden.

In Strömungsrichtung vorgeordnet zu dem Gebläse 7 ist eine Luft-Reinigungsvorrichtung 12 angeordnet.

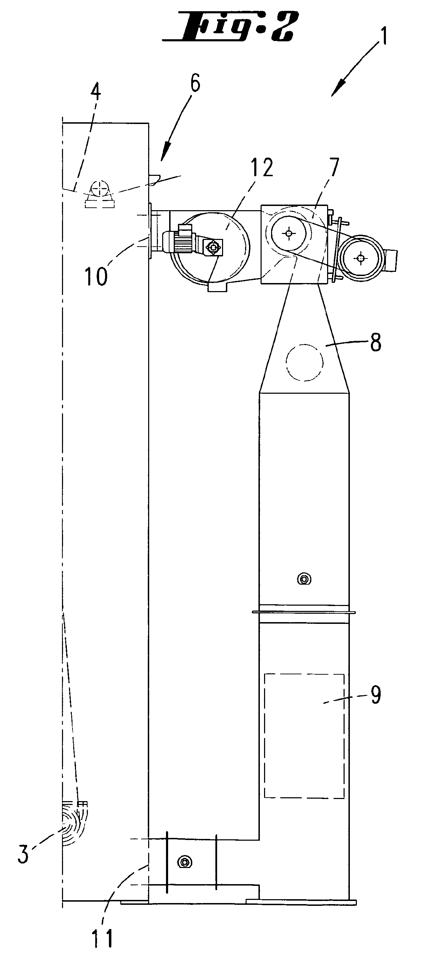

Die Luft-Reinigungsvorrichtung 12 ist in weiterer Einzelheit in den Fig. 2 bis 5 dargestellt.

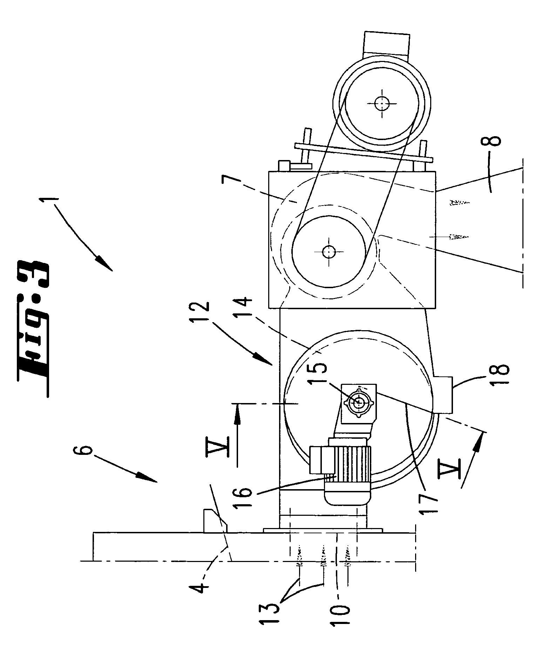

Mit Bezug zu den Fig. 2 und 3 ist zu erkennen, dass der Querschnitt der Einlassöffnung 10, betreffend eine vertikale Höhe, relativ klein ist gegenüber dem Querschnitt des Luftkanals im Bereich der Luftreinigungsanlage 12. Die vertikale Höhe des Einlassquerschnittes 10 ist etwa die Hälfte der vertikalen Höhe im Bereich der Luft-Reinigungsvorrichtung 12 (dessen größter Durchmesser).

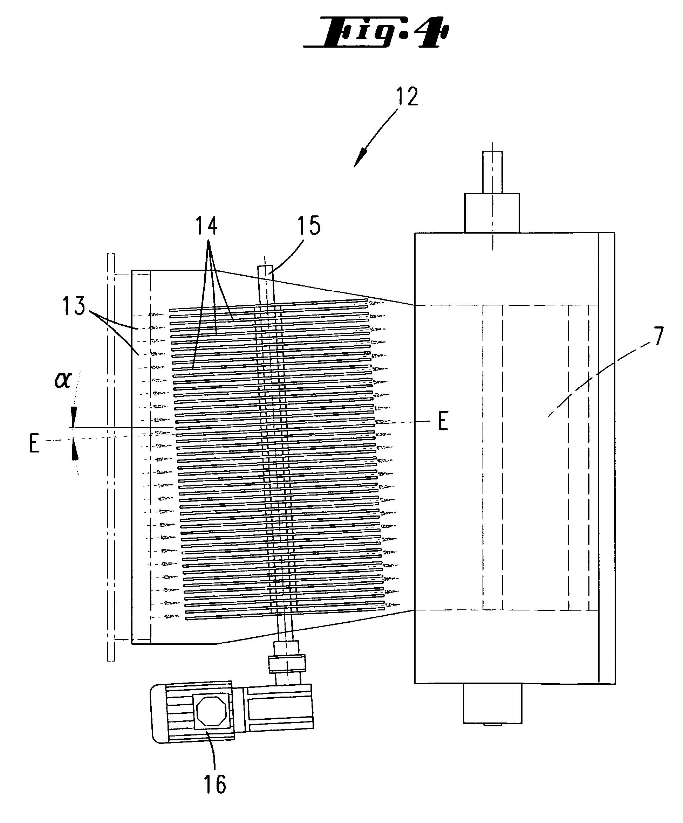

Hierdurch ist erreicht, dass die durch die Pfeile 13 angedeutete Luftströmung die Luftreinigungsanlage nur in einem Teilbereich, bezogen auf die vertikale Höhe, durchströmt. Über die Breite, wie etwa Fig. 4 zu entnehmen, ist beim Ausführungsbeispiel aber eine vollständige Durchströmung vorgesehen.

Die Luft-Reinigungsvorrichtung 12 besteht im Einzelnen aus einer Vielzahl von plattenartigen Elementen 14, die auf einer Welle 15 befestigt sind. Die Elemente 14 sind kreisförmig. Die Elemente 14 sind auf der Welle 15 bzw. in Breitenrichtung des Luftkanals in engem Abstand angeordnet. Der Abstand beträgt beim Ausführungsbeispiel 10 bis 12 mm, er kann sich auch beispielsweise im Bereich von 1 bis 20 mm bewegen, oder auch in anderen Teilungen über 20 mm hinaus, wobei die angegebene zahlenmäßige Bandbreite auch sämtliche Zwischenwerte als offenbart eingeschlossen sind und zwar insbesondere in 1/10 mm Schritten.

Der Durchmesser, oder eine Größtabmessung in Strömungsrichtung, eines Reinigungselementes 14 kann 200 bis 800 mm betragen, wobei auch hier wiederum sämtliche Zwischenwerte, insbesondere in 1 mm Schritten, in die Offenbarung eingeschlossen sind. Beim Ausführungsbeispiel beträgt die Abmessung 400 mm. Entsprechend ist die vertikale Erstreckung der Luftströmung beim Ausführungsbeispiel ca. 200 mm, wobei sich dieser Wert auch zwischen beispielsweise 50 und 400 mm bewegen kann. Auch insofern sind wieder sämtliche Zwischenwerte, insbesondere in 1 mm Schritten, in die Offenbarung eingeschlossen.

Auf der Welle 15 sind eine Vielzahl von Reinigungselementen 14 in Achsrichtung der Welle 15 hintereinander angeordnet. Sie erstrecken sich parallel zueinander. Die Anzahl der Reinigungselemente 14 auf der Welle 15, die bevorzugt fest auf der Welle angeordnet sind, kann insbesondere 10 bis 200 Stück betragen, wobei auch hier wieder sämtliche Zwischenwerte, in einer Schritten, in die Offenbarung einbezogen sind. Beim Ausführungsbeispiel sind 49, also ca. 50 Reinigungselemente 14 vorgesehen.

Außerhalb des Luftkanals ist die Welle 15 durch einen Elektromotor 16 angetrieben.

Der Antrieb erfolgt bevorzugt vergleichsweise langsam, nämlich beim Ausführungsbeispiel mit einer Umdrehung innerhalb von vier Stunden. Es auch ein schrittweiser Antrieb vorgesehen sein, etwa eine Bewegung um 5 oder 10 - lediglich als Beispielswert genannt - Winkelgrade, mit einer Stillstandsperiode dazwischen. Die Stillstandsperiode kann beispielsweise eine Minute bis sechzig Minuten oder auch eine halbe Stunde bis fünf Stunden und mehr betragen. Auch insofern sind sämtliche Zwischenwerte, insbesondere in Minutenschritten, in die Offenbarung einbezogen. Die Bewegung, gegebenenfalls intermittierende Bewegung, der Reinigungselemente in der Luftströmung kann auch ergänzend oder allein von anderen Parametern abhängig vorgenommen werden. Beispielsweise von der im Wärmeschrank durchgesetzten Textilmenge (lfd. m der Ware) und/oder von einer Druckveränderung (Druckabfall) am Gebläse 7. Darüber hinaus auch beispielsweise im Hinblick auf einen von einem Schmutzsensor, der die Verschmutzung an einem Reinigungselement und/ oder im Gebläse misst, gelieferten Wert.

Die Plattenelemente 14 bestehen beim Ausführungsbeispiel aus einem Stahlwerkstoff, der für die hier gegebene Temperaturen von ca. 200° bis 250° C ausgelegt ist. Sie können auch aus einem sonstigen metallischen Werkstoff, beispielsweise Aluminium, bestehen. Weiter sind die Reinigungselemente 14 derart ausgelegt, dass die Schmutzbestandteile der Luft sich auf der Oberfläche gut absetzen. Hierzu ist eine Rauigkeit vorgesehen. Diese kann durch beispielsweise Sandstrahlen erzeugt sein. Sie kann auch durch Rillen gegeben sein. Etwa konzentrisch verlaufende Rillen. Weiter wird die Erfahrungstatsache genutzt, dass nach einem erstmaligen Absetzen von Schmutzteilen auf dem Reinigungselement weitere Schmutzteile auf den bereits abgesetzten Schnutzteilen sich sehr günstig absetzen.

Es ist auch bevorzugt, eine Kühlung der Reinigungselemente vorzusehen. Beispielsweise kann dies durch eine Kühlung der Welle 15 und die sich hieraus durch Wärmeleitung ergebende Kühlung der Plattenelemente 14 erfolgen (im Einzelnen nicht dargestellt).

Neben dem bereits genannten Werkstoffstahl können die Plattenelemente ganz oder teilweise auch aus einem hochtemperaturbeständigen Kunststoff wie etwa Carbon oder Kevlaer bestehen.

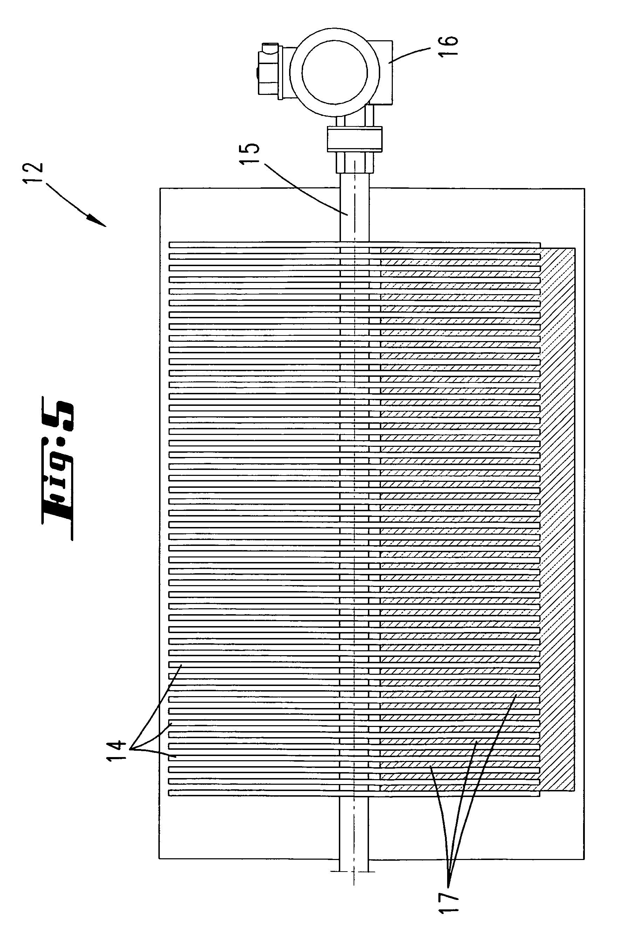

Im unteren Bereich der Luft-Reinigungsvorrichtung 12 ist eine Abkratzvorrichtung 17 vorgesehen. Diese greift kammartig, wie sich dies insbesondere aus Fig. 5 ergibt, in die Zwischenräume zwischen den Reinigungselementen 14 und liegt oberflächlich an den Reinigungselementen 14, bevorzugt mit einer Kantenwirkung, an. So wird abgelagerter Schmutz wieder abgeschabt. Er kann in ein Aufnahmebehältnis 18 fallen, das beispielsweise eine Entleerungsklappe aufweisen kann mit der es in gewissen Abständen geleert werden kann. Vorteilhaft ist auch die gesamte Reinigungseinrichtung 12 herausnehmbar vorgesehen, so dass die zur Überholung und gründlichen Reinigung herausgenommen werden kann, während in dieser Zeit eine bereits überholte Reinigungseinrichtung eingesetzt werden kann, so dass der Betrieb praktisch nicht unterbrochen werden muss.

Aufgrund des nur im oberen Bereich die Reinigungselemente 14 überstreichenden Luftstromes befinden sich die Reinigungselemente 14 nur teilweise in dem Luftstrom. Teilweise, im unteren Bereich, sind sie praktisch nicht von der Luftströmung beaufschlagt. Deshalb kann hier günstig die angesprochene Reinigung vorgenommen werden. Ein Teilbereich des Reinigungselemente ist also aus der Luftströmung herausbewegt während ein anderer hereinbewegt ist, entweder auf kontinuierlicher oder intermittierender Basis, wie bereits erwähnt.

Die Reinigungselemente können, wie beim Ausführungsbeispiel, in Richtung des Luftstromes bzw. mit dem Luftstrom gehend, beweglich angeordnet sein. Sie können aber auch in entgegengesetzter Richtung sich bewegend angeordnet sein.

Weiterhin ist von Bedeutung, dass die Reinigungselemente 14 derart angeordnet sind, dass ihre Flächenerstreckung, siehe Ebene E-E sich in einem spitzen Winkel Alpha zu der Luftströmung befindet. Die Luftströmung erfährt im Bereich der Reinigungselemente also eine gewisse Umleitung, was zu einer intensiven Berührung der Luft mit der Oberfläche der Reinigungselemente führt und so das Scheiden von Schmutzbestandteilen aus der Luft fördert.

Während beim Ausführungsbeispiel die Welle 15 horizontal verlaufend angeordnet ist, kann auch insofern abweichend hiervon noch eine Schrägstellung vorgesehen sein. In einem solchen Fall verlaufen die Reinigungselemente 14 bezüglich einer Horizontalen und einer Vertikalen geneigt.

Die Reinigungselemente 14 sind bevorzugt geschlossen ausgebildet. Die Luft kann nur an den Reinigungselementen oberflächlich entlang strömen. Sie kann sie nicht durchsetzen. Andererseits könnten aber in den Reinigungselementen auch Durchgangsöffnungen verteilt vorgesehen sein.

Die Dicke eines Reinigungselementes ist gering. Beispielsweise im Bereich von 1 bis 25 mm, wobei auch diesbezüglich alle Zwischenwerte, insbesondere in 1/10 mm Schritten, in die Offenbarung einbezogen sind.

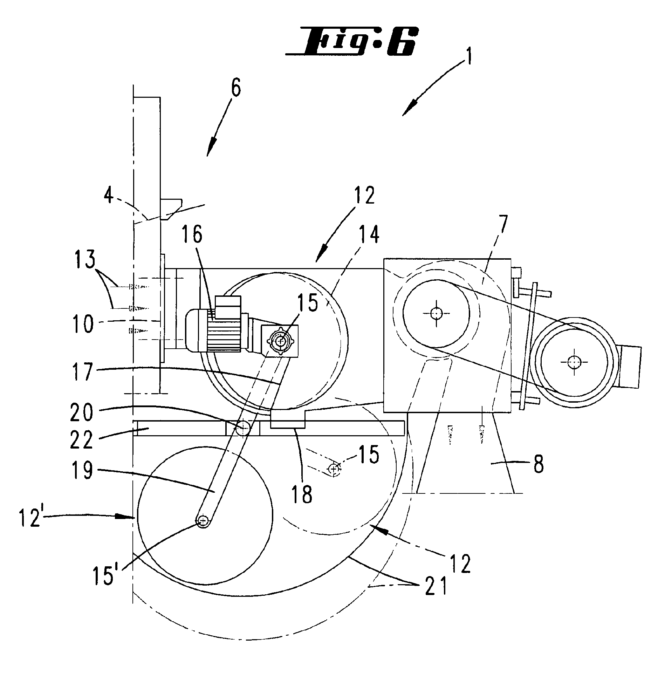

Mit Bezug zu Fig. 6 ist eine grundsätzlich mit der in Fig. 3 dargestellten Anordnung vergleichbare Anordnung wiedergegeben, wobei jedoch hier zwei Luft-Reinigungsvorrichtungen 12 und 12' vorgesehen sind, von denen sich eine, die Luft-Reinigungsvorrichtung 12, in einer Reinigungsstellung befindet und eine andere, die Luft-Reinigungsvorrichtung 12', in einer Auswechselstellung. Die Wellen,15, 15' der Luft-Reinigungsvorrichtung 12,12' sind an einer gemeinsamen Achse 19 befestigt, die um eine Drehachse 20 drehbar ist. Es können auch beiden Endbereichen der Luft-Reinigungsvorrichtungen 12,12' zugeordnet zwei derartige Achsen 19 etwa vorgesehen sein. Mittels der Achsen kann eine einfache Verdrehung der Luft-Reinigungsvorrichtungen 12,12' um die Drehachse 20 erfolgen, um so eine der Luft-Reinigungsvorrichtungen in die Arbeitsstellung zu verbringen und die andere in eine Auswechselstellung. Bei dem gezeigten möglichen Ausführungsbeispiel ist die Auswechselstellung in das Luftführungsgehäuse 21 einbezogen. Zum tatsächlichen Entnehmen der Luft-Reinigungsvorrichtung 12' ist eine klappenartige Öffenbarkeit des Luftführungsgehäuses 21 angedeutet. Die Auswechselstellung der Luft-Reinigungsvorrichtung 12' könnte aber auch sogleich außerhalb des Luftführungsgehäuses vorgesehen sein.

Beim Ausführungsbeispiel sind weitere Einführungsschächte 22 vorgesehen, mit denen etwa Abschieberungsteile eingeschoben werden können, um dann, bezogen auf die Auswechselstellung, das Luftführungsgehäuse 21 zu öffnen und die Luft-Reinigungsvorrichtung in zur Reinigung aus dem. Gehäuse zu entnehmen.

In Einzelheit kann auch vorgesehen sein, dass die Luft-Reirtigungsvorrichtungen 12,12' mit oder ohne die Abteinigungsvorrichtung verfahrbar sind. Mit Hilfe einer solchen Anordnung kann sogar ein kontinuierlicher Betrieb eines Warmluftschrankes erreicht werden, ohne dass zum Wechsel der Luft-Reiidgungselnrichtung eine Unterbrechung erforderlich ist.

## Patentansprüche

1. Warmluftschrank (1) für eine Textilbehandlungsardage, insbesondere eine Bandwaren-Behanflungsanlage, beispielsweise als Bestandteil einer Bandwaren-Textilfärbeeinrichtung oder einem Bandwaren-Textilfixiereinrichtung, mit einer Zuluftöffnung und einer Abluftöffnung, wobei in dem Warmluftschrank eine von der Luft zu durchströmende Luft-Reinigungsvorrichtung (12) angeordnet ist mit einem aus einem metallischen Werkstoff oder einem hochtemperaturbeständigen Kunststoff bestehenden Reinigungselement (14), **dadurch** gekenzeichnet, dass die Luft-Reinigungsvorrichtung (12) aus einer Vielzahl von plattenartigen Reinigungselementen (14) besteht, die auf einer Welle (15) befestigt sind, welche Reinigungselemente (14) geschlossen ausgebildet sind zur Ablagerung von in der oberflächlich an den Plattenelemengen entlangströmenden Abluft befindlichen Schmutzteile auf der Plattenoberfläche.

2. Warmluftschrank nach Anspruch 1, **dadurch gekennzeichnet, dass** die Reinigungselemente (14) bewegbar sind, bevorzugt drehbar sind.

3. Warmluftschrank nach einem der vorhergehenden Ansprüche, **dadurch gekennzeichnet, dass** die Reinigungselemente (14) mittels der Welle (15) bewegbar sind.

4. Warmluftschrank nach einem der vorhergehenden Ansprüche, **dadurch gekennzeichnet, dass** die Reinigungselemente (14) derart bezüglich eines Luftstromes angeordnet sind, dass sie sich nur teilweise in der Luftströmung befinden.

5. Warmluftschrank nach Anspruch 4, **dadurch gekennzeichnet, dass** ein aus der Luftströmung herausbewegtes Reinigungselement (14) mit einer Abreinigungsvorrichtung zusammenwirkt.

6. Warmluftschrank nach eines der vorhergehenden Ansprüche, **dadurch gekennzeichnet, dass** ein Reinigungselement (14) als Stahlplatte ausgebildet ist und, bevorzugt, zumindest teilweise aus einem magnetischen Werkstoff besteht oder magnetisierbar ist.

7. Warmluftschrank nach einem der vorhergehenden Ansprüche, **dadurch gekennzeichnet, dass** ein Reinigungselement (14) statisch aufladbar ist.

8. Warmluftschrank nach einem der vorhergehenden Ansprüche, **dadurch gekennzeichnet, dass** das Reinigungselement (14) eine große Oberflächenrauhigkeit aufweist.

9. Warmluftschrank nach einem der vorhergehenden Ansprüche, **dadurch gekennzeichnet, dass** das Reinigungselement (14) intermittierend bewegbar ist und/oder langsam bewegbar ist.

10. Warmluftschrank nach einem der Ansprüche 4 bis 9, **dadurch gekennzeichnet, dass** das Reinigungselement (14) einmal pro Stunde oder weniger aus der Luftströmung heraus und wieder hineinbewegt wird, wobei, bevorzugt, das Reinigungselement (14) einmal in vier Stunden oder weniger aus der Luftströmung heraus- und wieder in diese hineinbewegt wird.

11. Warmluftschrank nach einem der vorhergehenden Ansprüche, **dadurch gekennzeichnet, dass** die Welle (15) mit einer Strörnungsrichtung der Luftströmung einen zumindest spitzen Winkel einschließt.

12. Warmluftschrank nach einem der vorhergehenden Ansprüche, **dadurch gekennzeichnet, dass** ein Reinigungselement (14) gekühlt ist.

13. Wartaluftschrank nach einem der vorhergehenden Ansprüche, **dadurch gekennzeichnet, dass** zwei Lurt-Reinigungsvorrichtungen (12, 12') vorgesehen sind, von welche eine sich in einer Auswechselstellung befindet.

14. Luft-Reinigungsvorrichtung, insbesondere für einen Warmluftschrank gemäß den Merkmalen des Oberbegriffes des Anspruches 1, mit einem aus einem metallischen Werkstoff oder einem hochtemperaturbeständigen Kunststoff bestehenden Reinigungselement, **dadurch gekennzeichnet, dass** die Lutt-Reinigungsvonrichtung (12) aus einer Vielzahl von plattenartigen Remigungselementen (14) besteht, die auf einer Welle (15) befestigt sind, welche Reinigungselemente (14) geschlossen ausgebildet sind, zur Ablagerung von in oberflächlich an den Plattenelementan entlangströnnende Abluft befindlichen Schmutzteilen auf der Plattenoberfläche.

15. Luft-Reinigungsvorrichtung nach Anspruch 14, **gekennzeichnet durch** eines oder mehrere Merkmale der Ansprüche 1 bis 13.

## Claims

1. Warm air cabinet (1) for a textile treatment assembly, in particular for a narrow fabrics treatment assembly, for example as a component of a narrow fabrics textile dyeing device or a narrow fabrics textile fixing device, comprising a supply air opening and an exhaust air opening, an air cleaning device (12) for the air which will flow through being arranged in the warm air cabinet comprising a cleaning element (14) consisting of a metal material or heat-resistant plastics material, **characterised in that** the air cleaning device (12) consists of a plurality of plate-like cleaning elements (14) which are attached to a shaft (15), said cleaning elements (14) being constructed in a closed manner for depositing dust particles present in the exhaust air flowing along the surfaces of the plate elements on the plate surface.

2. Warm air cabinet according to claim 1, **characterised in that** the cleaning elements (14) are movable, preferably rotatable.

3. Warm air cabinet according to any one of the preceding claims, **characterised in that** the cleaning elements (14) are movable by means of the shaft (15).

4. Warm air cabinet according to any one of the preceding claims, **characterised in that** the cleaning elements (14) are arranged in such a way with respect to an air flow that they are only partially in the air flow.

5. Warm air cabinet according to claim 4, **characterised in that** a cleaning element (14) which has been moved out of the air flow cooperates with a cleaning device.

6. Warm air cabinet according to any one of the preceding claims, **characterised in that** a cleaning element (14) is formed as a steel plate and preferably consists of a magnetic material or is magnetisable, at least in part.

7. Warm air cabinet according to any one of the preceding claims, **characterised in that** a cleaning element (14) can be statically charged.

8. Warm air cabinet according to any one of the preceding claims, **characterised in that** the cleaning element (14) has a high surface roughness.

9. Warm air cabinet according to any one of the preceding claims, **characterised in that** the cleaning element (14) is intermittently and/or slowly movable.

10. Warm air cabinet according to any one of claims 4 to 9, **characterised in that** the cleaning element (14) is moved out of the air flow and back in again once per hour or less, the cleaning element (14) preferably being moved out of the air flow and back in again once every four hours or less.

11. Warm air cabinet according to any one of the preceding claims, **characterised in that** the shaft (15) forms an at least acute angle with a direction of flow of the air flow.

12. Warm air cabinet according to any one of the preceding claims, **characterised in that** a cleaning element (14) is cooled.

13. Warm air cabinet according to any one of the preceding claims, **characterised in that** two air cleaning devices (12, 12') are provided, of which one is in a replacement position.

14. Air cleaning device, in particular for a warm air cabinet according to the features of the preamble of claim 1, comprising a cleaning element consisting of a metal material or a heat-resistant plastics material, **characterised in that** the air cleaning device (12) consists of a plurality of plate-like cleaning elements (14) which are attached to a shaft (15), said cleaning elements (14) being constructed in a closed manner for depositing dust particles present in the exhaust air flowing along the surfaces of the plate elements on the plate surface.

15. Air cleaning device according to claim 14, **characterised by** one or more features of claims 1 to 13.

## Revendications

1. Etuve à circulation d'air chaud (1) pour une installation de traitement du textile, en particulier, une installation de traitement de rubans, notamment comme composant d'un dispositif de teinture de textiles en rubans ou d'un dispositif de fixation de textiles en rubans, avec une ouverture d'alimentation d'air et une ouverture d'évacuation d'air, dans laquelle il est agencé, dans l'étuve à circulation d'air chaud, un dispositif d'épuration de l'air (12) à faire traverser par l'air, lequel est doté d'un élément d'épuration (14) constitué d'un matériau métallique ou d'un matériau synthétique résistant aux températures élevées, **caractérisée en ce que** le dispositif d'épuration de l'air (12) se compose d'une pluralité d'éléments d'épuration (14) en forme de plaque, qui sont fixés sur un arbre (15), lesquels éléments d'épuration (14) sont réalisés en système fermé pour déposer, sur la surface des plaques, des parties de saleté se trouvant dans l'air évacué s'écoulant en surface le long des éléments de plaque.

2. Etuve à circulation d'air chaud selon la revendication 1, **caractérisée en ce que** les éléments d'épuration (14) peuvent être déplacés, de préférence par rotation.

3. Etuve à circulation d'air chaud selon l'une quelconque des revendications précédentes, **caractérisée en ce que** les éléments d'épuration (14) peuvent être déplacés au moyen de l'arbre (15).

4. Etuve à circulation d'air chaud selon l'une quelconque des revendications précédentes, **caractérisée en ce que** les éléments d'épuration (14) sont agencés, par rapport à un écoulement d'air, de sorte qu'ils ne se trouvent que partiellement dans l'écoulement d'air.

5. Etuve à circulation d'air chaud selon la revendication 4, **caractérisée en ce qu'**un élément d'épuration (14), qui est déplacé hors de l'écoulement d'air, coopère avec un dispositif de nettoyage.

6. Etuve à circulation d'air chaud selon l'une quelconque des revendications précédentes, **caractérisée en ce qu'**un élément d'épuration (14) se présente sous la forme d'une plaque en acier et est de préférence constitué, au moins en partie, d'un matériau magnétique ou magnétisable.

7. Etuve à circulation d'air chaud selon l'une quelconque des revendications précédentes, **caractérisée en ce qu'**un élément d'épuration (14) peut être chargé d'électricité statique.

8. Etuve à circulation d'air chaud selon l'une quelconque des revendications précédentes, **caractérisée en ce que** l'élément d'épuration (14) présente une rugosité de surface.

9. Etuve à circulation d'air chaud selon l'une quelconque des revendications précédentes, **caractérisée en ce que** l'élément d'épuration (14) peut être déplacé par intermittence et/ou peut être déplacé de manière lente.

10. Etuve à circulation d' air chaud selon l'une quelconque des revendications 4 à 9, **caractérisée en ce que** l'élément d'épuration (14) est déplacé une fois par heure, ou moins, hors de l'écoulement d'air, puis l'est à nouveau à l'intérieur de ce dernier, l'élément d'épuration (14) étant déplacé, de préférence, une fois en quatre heures ou moins hors de l'écoulement d'air, puis à nouveau à l'intérieur de ce dernier.

11. Etuve à circulation d'air chaud selon l'une quelconque des revendications précédentes, **caractérisée en ce que** l'arbre (15) forme un angle au moins aigu avec une direction de l'écoulement d'air.

12. Etuve à circulation d'air chaud selon l'une quelconque des revendications précédentes, **caractérisée en ce qu'**un élément d'épuration (14) est refroidi.

13. Etuve à circulation d'air chaud selon l'une quelconque des revendications précédentes, **caractérisée en ce qu'**il est prévu deux dispositifs d'épuration de l'air (12, 12'), dont l'un d'eux est situé dans une position de remplacement.

14. Dispositif d'épuration de l'air, en particulier, étuve à circulation d'air chaud selon les caractéristiques du préambule de la revendication 1, avec un élément d'épuration constitué d'un matériau métallique ou d'un matériau synthétique résistant à des températures élevées, **caractérisé en ce que** le dispositif d'épuration de l'air (12) se compose d'une pluralité d'éléments d'épuration (14) en forme de plaque, qui sont fixés sur une arbre (15), lesquels éléments d'épuration (14) sont réalisés en système fermé pour déposer, sur la surface des plaques, des parties de saleté se trouvant dans l'air évacué s'écoulant en surface le long des éléments de plaque.

15. Dispositif d'épuration de l'air selon la revendication 14, **caractérisé par** une ou plusieurs caractéristiques des revendications 1 à 13.
